# EUROPEAN PATENT SPECIFICATION

(11) **EP 2 610 735 B1**
(45) Date of publication and mention of the grant of the patent: **28.02.2018**
(21) Application number: 12166660.6
(22) Date of filing: 03.05.2012
(51) Int. Cl.: G06F 3/14, G09G 5/34

(54) **Method for controlling multiple displays**
Verfahren zur Steuerung mehrerer Anzeigen
Procédé pour contrôler plusieurs affichages

(30) Priority: 27.12.2011 JP 2011285972; 24.02.2012 JP 2012039058
(43) Date of publication of application: 03.07.2013
(73) Proprietor: Nintendo Co., Ltd., Kyoto, 601-8501 (JP)
(72) Inventor: Tsuda, Munetaka, Kyoto 601-8501 (JP); Aoki, Ryoma, Kyoto 601-8501 (JP); Kakimoto, Yasuto, Kyoto 601-8501 (JP)
(74) Representative: Lang, Johannes

(56) References cited:
- EP-A1- 2 150 052
- EP-A1- 2 299 352
- EP-A2- 1 956 478
- EP-A2- 2 375 304
- WO-A1-2011/024914
- US-A1- 2006 050 090

## Description

### TECHNICAL FIELD

The present invention relates to technology for displaying an image on multiple displays.

### BACKGROUND ART

A technology for displaying an image captured by a camera-equipped mobile phone on a large-screen television using wireless communication is known. For example, according to the technology disclosed in JP-A-2008-008917, an image can be displayed on a large screen of a television, which image otherwise could be viewed only on a small screen of a camera-equipped mobile phone. In general, a larger screen can provide a better view of an image than a smaller screen. EP1956 478 A2 discloses a display apparatus and an image output method thereof, for processing an image signal such that an image 5 appropriate for an external display apparatus is output. EP 2 375 304 A2 discloses methods and devices for using motion to control a portable electronic device having a housing containing a display and a sensor. EP 2 299 352 A1 discloses an information processing terminal with a plurality of display parts and an operation reception part to select an area on a first display part to be displayed on a second display part. WO 2011/024914 A1 (and corresponding US 2012/147036) discloses a display system with two display units wherein a specific area of second display unit is displayed on the first display unit. EP 2 150 052 A1 and US 2006/050090 A1 disclose further examples of systems with two displays for displaying a first image on the first display and a portion of the second display on the second display and using 20 scrolling and magnifying operations independently.

### SUMMARY

However, the technology disclosed in JP-A-2008-008917 is limited to displaying the same image on two displays in the same manner. In view of the foregoing, an objective of the present invention is to improve convenience for a user when images based on the same image data are displayed on multiple displays.

The present invention is defined in the independent claims. According to an aspect of the present invention, there is provided a first display; a second display, which is a device separate from the first display; and a controller that causes the first display and the second display to display an image, wherein the controller includes: a first display controller that causes the first display to display a first image in accordance with image data; and a second display controller that causes the second display to display selectively the first image having a first magnification, or a second image that is a partial image of the first image and has a second magnification greater than the first magnification.

In this information-processing system, it is possible to display an image on the first display while displaying the image on the second display with the first or second magnification, so that a partial image, which is a part of the image, can be displayed. Namely, it becomes possible to cause two separate displays to display images having the same magnification or images having different magnifications, as required, thereby to improve convenience for a user.

According to another aspect of the present invention, the controller further includes a position specifying unit that specifies a position in the first image, and the second display controller causes the second display to display, as the second image, a portion of the image at the position specified by the position specifying unit with the second magnification.

In this aspect, it is possible to magnify and display a specific portion of the image.

According to yet another aspect of the present invetnion, the second display controller causes the second image displayed on the second display to scroll in accordance with the position specified by the position specifying unit.

In this aspect, it is possible to scroll the image while magnifying the same.

According to yet another aspect of the present invetnion, the information-processing system further includes a motion detection unit that detects a motion of the second display, wherein the position specifying unit specifies the position of the second image based on the motion detected by the motion detection unit.

In this aspect, it is possible to change the position of the magnified portion of the image by moving the second display.

According to yet another aspect of the present invetnion, the information-processing system further includes a holding detection unit that detects holding of the second display by a user, wherein the position specifying unit specifies the position of the second image based on the motion detected by the motion detection unit in a case where holding of the second display by the user is detected by the holding detection unit.

In this aspect, it is possible to prevent the display position of the partial image from moving by an unintended motion of the second display.

According to yet another aspect of the present invetnion, when the second image is displayed on the second display by the second display controller, the first display controller causes the first display to display additionally an indicator image indicating the position of the second image.

In this case, the first display controller may cause the displayed indicator image to move in accordance with the position specified by the position specifying unit.

In this aspect, it is possible to indicate the position of the partial image in the image in a readily understandable manner.

According to yet another aspect of the present invetnion, when the indicator image reaches a boundary of a display area of the first display, the first display controller causes an image other than the first image displayed in the display area to be displayed.

In this aspect, it is possible to change both of the images displayed on the first display and the partial image displayed on the second display.

According to yet another aspect of the present invetnion, when causing the second display to display the first image with the first magnification, the second display controller reduces the image data and uses the reduced image data, and when causing the second display to display the second image with the second magnification, the second display controller uses the same image data that is used when the first display controller causes the image to be displayed.

In this aspect, it becomes unnecessary to reduce the image data when displaying the image with the second magnification, and therefore, display with the second magnification can be achieved by a process simpler than that for achieving display with the first magnification.

According to yet another aspect of the present invetnion, the second display controller: when, in a state where the first image is displayed on the second display, a magnifying operation for magnifying the first image to display the second image is performed, causes the second image to be displayed on the second display, when a state where the second image is displayed transitions to a state where another image including the second image is displayed, retains a position of the second image in the other image; and when the magnifying operation is performed again after retention of the position, causes the second image at the retained position to be displayed on the second display.

In this aspect, it is possible to start displaying the partial image at the position where the last magnifying operation was performed.

According to yet another aspect of the present invetnion, when a predetermined operation is performed by a user in a state where the first image is displayed on the second display, the second display controller causes the retained position to revert to a predetermined initial position.

In this case, when an operation for scrolling the first image displayed on the first display or the second display is performed by a user in a state where the first image is displayed on the second display, the second display controller may cause the retained position to revert to the predetermined initial position.

In this aspect, if the image displayed on the first display is caused to change as a result of scrolling, the display position of the partial image can revert to the initial position.

According to yet another aspect of the present invetnion, when the first image is displayed, the second display controller causes an object for performing an operation relating to the first image to be displayed, and when the second image is displayed, the second display controller causes the object not to be displayed.

In this aspect, it is possible to display the partial image using a larger part of the display region of the second display.

In yet another preferred embodiment, the controller includes an object selection unit that, when the second display controller causes the second image to be displayed, makes an object in the second image selectable in response to a predetermined operation by a user. In this aspect, it is possible to narrow down the selectable objects.

According to yet another aspect of the present invetnion, there is provided a first display; a second display, which is a device separate from the first display; a first display controller that causes a first display to display a first image in accordance with image data; and a second display controller that causes the second display to display selectively the first image having a first magnification, or a second image which is a partial image of the first image and has a second magnification greater than the first magnification.

According to yet another aspect of the present invetnion, there is provided a controller including: a first display controller that causes the first display to display a first image in accordance with image data; and a second display controller that causes a second display, which is a device separate from the first display, to display selectively the first image having a first magnification, or a second image which is a part of the first image and has a second magnification greater than the first magnification.

According to yet another aspect of the present invetnion, there is provided an image-displaying method including: causing a first display to display a first image in accordance with image data; and causing a second display, which is a device separate from the first display, to display selectively the first image having a first magnification, or a second image which is a partial image of the first image and has a second magnification greater than the first magnification.

According to yet another aspect of the present invetnion, there is provided a computer program product that causes a computer to execute: causing a first display to display a first image in accordance with image data; and causing a second display, which is a device separate from the first display, to display selectively the first image having a first magnification, or a second image which is a partial image of the first image and has a second magnification greater than the first magnification.

### Brief Description of the Drawings

Exemplary embodiments of the present invention will now be described in detail based on the following figures, wherein:
FIG. 1 is a diagram showing a configuration of a display system;
FIG. 2 is a diagram showing an external configuration of a controller;
FIG. 3 is a diagram illustrating a state when a user holds the controller;
FIG. 4 is a block diagram showing a hardware configuration of the controller;
FIG. 5 is a block diagram showing a hardware configuration of a main device;
FIG. 6 is a block diagram showing a principal functional configuration of the main device;
FIGS. 7A and 7B are diagrams showing exemplary images displayed in each operation mode;
FIG. 8 is a flowchart showing a process executed by the main device;
FIG. 9 is a diagram showing an exemplary image displayed on the controller;
FIG. 10 is a flowchart showing an interruption process including a magnifying process.
FIG. 11 is a diagram showing an exemplary image displayed when quick zoom is performed;
FIG. 12 is a flowchart showing an interruption process including a scrolling process;
FIG. 13 is a flowchart showing a scroll process included in the scrolling process;
FIG. 14 is a diagram showing an example of a change of display position information;
FIG. 15 is a diagram showing an example of a change of display position information;
FIG. 16 is a flowchart showing a process executed by the main device;
FIGS. 17A to 17C are diagrams showing exemplary screen transitions on the monitor; and
FIGS. 18A and 18B are diagrams showing exemplary operation objects and selection candidates thereof.

### Detailed Description

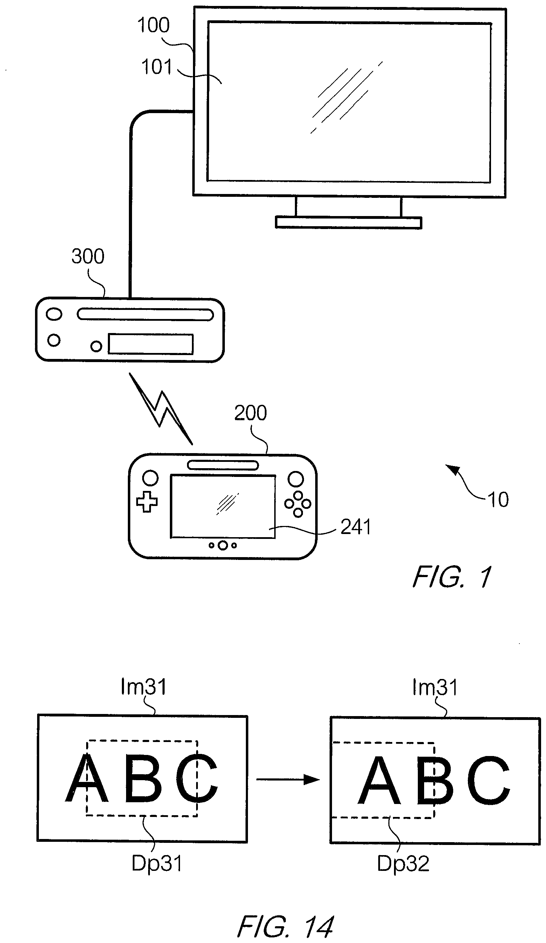

FIG. 1 is a diagram showing a configuration of display system 10, which is an exemplary embodiment of the present invention. Display system 10 is an information-processing system for displaying a variety of images in accordance with operations performed by a user. An image displayed in display system 10 is, for example, an image of a game or a webpage.

Display system 10 is configured to include monitor 100, controller 200, and main device 300. It is to be noted, however, that display system 10 may be configured to include another controller other than controller 200, or may be provided with multiple controllers 200. Further, display system 10 may be used without use of monitor 100.

Monitor 100 is a device for displaying an image, and may be, for example, a television set for receiving a television broadcast. In this explanation, monitor 100 is a stationary-type device. It is to be noted that monitor 100 does not have to have a function of receiving a television broadcast, and may be a device of a personal computer, or the like. It is assumed that monitor 100 has display area 101 having a larger size than display area 241 of controller 200. Further, display area 101 of monitor 100 and display area 241 of controller 200 do not have to have the same aspect ratio.

Controller 200 is a terminal on which an image is displayed, and is held by a user to perform various operations. Controller 200 herein is a portable device that has display area 241 and is to be held and operated by a user.

Main device 300 is a controller for controlling operation of monitor 100 and controller 200. To achieve the purpose, controller 300 is connected to each of monitor 100 and controller 200 via wired or wireless communication. It is assumed here that main device 300 conducts wireless communication with controller 200 and conducts wired communication with monitor 100, though the communication may be performed in another manner.

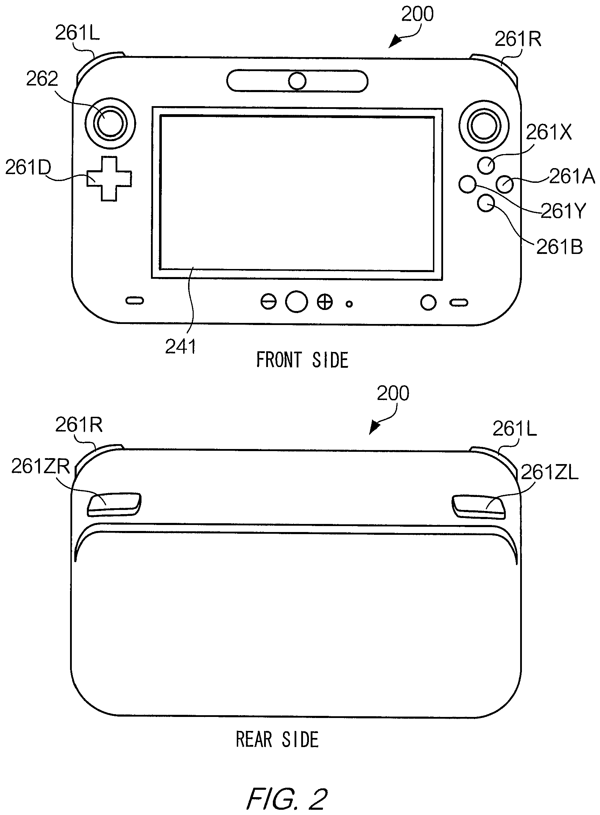

FIG. 2 is a diagram showing an external configuration of controller 200, and shows a side on which display area 241 is provided and a side opposite thereto. For convenience of explanation, the side on which display area 241 is provided will be referred to as a "front side" and the opposite side will be referred to as a "rear side" in the following description. Thus, the front side is a side facing the user when the user operates controller 200. Further, in the following description, the sides of controller 200 other than the front and rear sides will collectively be referred to as a "perimeter side."

On the front side of controller 200, there are provided A button 261A, B button 261B, X button 261X, Y button 261Y, and cross button 261D, in addition to display area 241. On the perimeter side of controller 200, there are provided L button 261L and R button 261R. Further, on the rear side of controller 200, there are provided ZL button 261ZL and ZR button 261ZR. In the following description, these buttons may simply be referred to as "buttons 261."

Buttons 261 are hardware keys that can be pressed. It is to be noted here that a hardware key is a key provided at a predetermined position of controller 200, and may also be referred to as a physical key. Buttons 261 generate operation information that indicates a state of pressing of each button or indicates whether each button is pressed.

Further, in addition to buttons 261, slide pad 262 is provided on the front side of controller 200. Slide pad 262 generates operation information that represents a strength and a direction of a force that is imparted to slide pad 262 by a finger of the user.

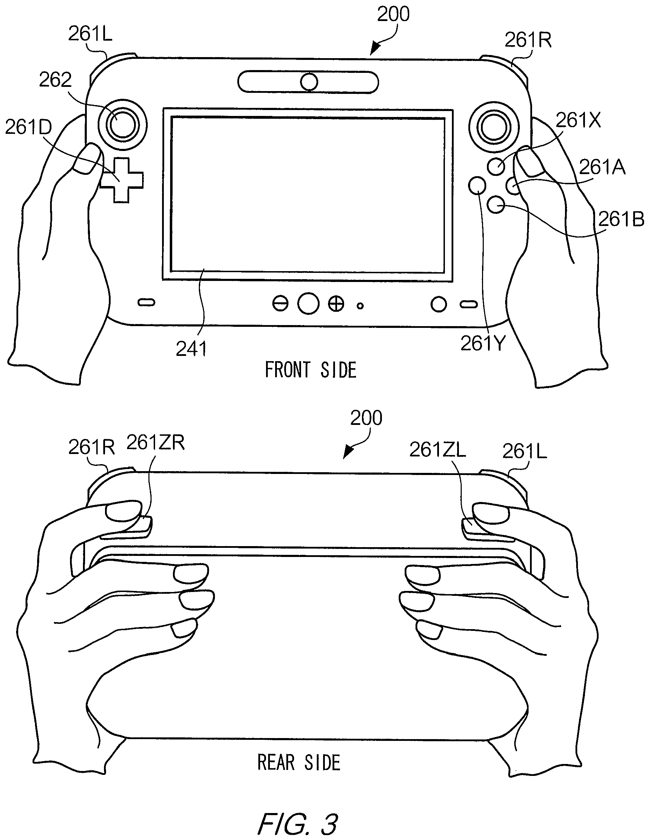

FIG. 3 is a diagram illustrating a state when a user holds controller 200with both hands. When the user holds controller 200 as shown, the user can press ZL button 261ZL with the index finger of the left hand and press ZR button 261ZR with the index finger of the right hand. In a state where the user presses ZL button 261ZL and ZR button 261ZR using both hands, the user can hold controller 200 more steadily as compared to a case where these buttons are not pressed, and thus, if the user performs various operations on the front side of controller 200, controller 200 has a reduced tendency to move or shake. It is to be noted that the effect of holding controller 200 steadily also may be obtained by pressing L button 261L and R button 261R simultaneously.

It is also to be noted that the way of holding controller 200 is not limited to the example shown in FIG. 3. For example, the user may place the index fingers near L button 261L and R button 261R and press ZL button 261ZL and ZR button 261ZR with the middle fingers. Further, the user may hold controller 200 so that the longer side extends in the vertical direction rather than in the horizontal direction.

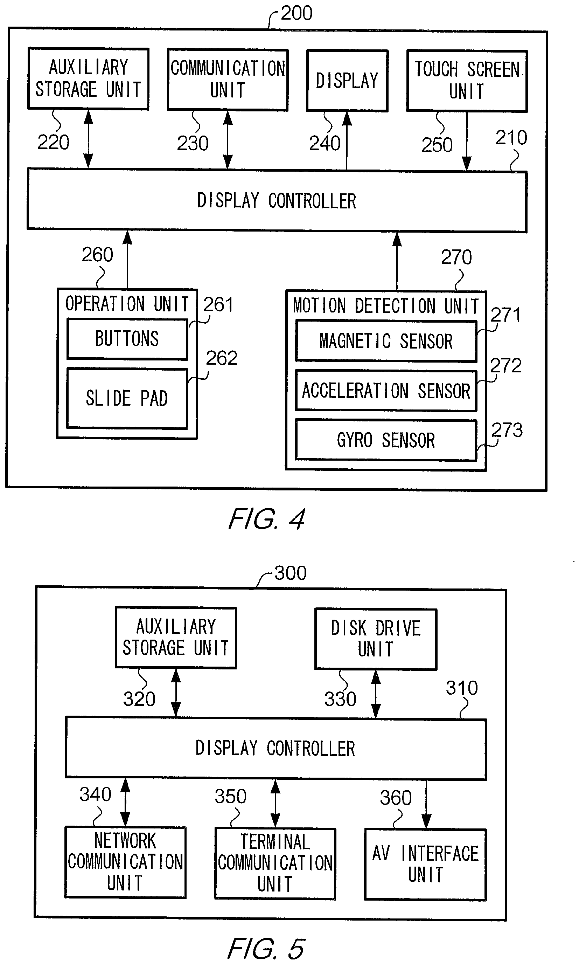

FIG. 4 is a block diagram showing a hardware configuration of controller 200. Controller 200 includes controller 210, auxiliary storage unit 220, communication unit 230, display 240, touch screen unit 250, operation unit 260, and motion detection unit 270.

Controller 210 is a means for controlling operations of various units of controller 200. Controller 210 includes a processing device such as a CPU (Central Processing Unit), a memory serving as a main memory device, an input/output interface for communicating information with various units of controller 200, and so on, and executes a program(s) to control display of images or data transmission and reception to and from main device 300. Further, controller 210 includes a codec for compressing image data to be sent to main device 300 and expanding image data received from main device 300. The format for compression and expansion performed by the codec is H.264, for example, though the format is not particularly limited.

Auxiliary storage unit 220 is a means for storing data used by controller 210. Auxiliary storage unit 220 is a flash memory, for example. Auxiliary storage unit 220 is capable of storing data such as bookmarks, which will be described later.

Communication unit 230 is a means for communicating with main device 300. Communication unit 230 includes an antenna or the like for communicating with main device 300 wirelessly.

Display 240 is a means for displaying an image. Display 240 includes a display panel having pixels formed by liquid crystal elements or organic EL (electroluminescence) elements, and a drive circuit for driving the display panel, and displays, in display area 241, an image in accordance with image data provided from controller 210.

Touch screen unit 250 is a means for receiving an operation performed by a user, and generating and supplying coordinate information that represents a position in display area 241. Touch screen unit 250 includes a sensor disposed to overlap display area 241, and a control circuit for generating coordinate information representing a position detected by the sensor and providing the coordinate information to controller 210. Touch screen unit 250 may be of resistive type, or may be of another type such as capacitive type.

Touch screen unit 250 provides software keys in cooperation with display 240. A software key is a key that is provided in display area 241 by a software process. Unlike a hardware key, the position of a software key is changeable, and display/hiding of a software key can be switched.

Operation unit 260 is another means for receiving an operation performed by a user. Operation unit 260 includes the aforementioned buttons 261 and slide pad 262, and provides controller 210 with operation information in accordance with an operation performed by a user.

Motion detection unit 270 is a means for detecting a motion of controller 200. Motion detection unit 270 includes magnetic sensor 271, acceleration sensor 272, and gyro sensor 273, whereby motion detection unit 270 generates motion information that indicates motion of controller 200 and supplies the motion information to controller 210. Motion information represents a change in geomagnetism (namely direction) detected by magnetic sensor 271, a change in acceleration detected by acceleration sensor 272, and a change in angle or angular velocity (namely, tilt) detected by gyro sensor 273. It is to be noted that motion detection unit 270 may be configured only to include at least one of magnetic sensor 271, acceleration sensor 272, and gyro sensor 273.

Controller 200 does not move unless an operation is performed by a user, and is caused to move as a result of shaking, tilting, or another operation performed by a user. Therefore, it can be said that motion detection unit 270 detects a motion or operation of a user by detecting a motion of controller 200. Thus, in this description, the motion information generated by motion detection unit 270 is included in operation information.

FIG. 5 is a block diagram showing a hardware configuration of main device 300. Main device 300 includes controller 310, auxiliary storage unit 320, disk drive unit 330, network communication unit 340, terminal communication unit 350, and AV (audio and visual) interface unit 360.

Controller 310 is a means for controlling operations of various units of main device 300, and corresponds to a "computer" in the present invention. Controller 210 includes a processing device such as a CPU, a GPU (Graphics Processing Unit), a DSP (Digital Signal Processor) or the like, a memory serving as a main memory device or a VRAM (Video Random Access Memory), an input/output interface for communicating information with various units of main device 300, and so on, and executes a program(s) to control generation of image data to be transmitted to monitor 100 and controller 200. The programs that can be executed by controller 310 include a game program, a browser program for browsing webpages, and so on, such programs being described later. Further, controller 310 includes a codec for compressing image data to be sent to controller 200 or monitor 100 and expanding image data received from controller 200.

Auxiliary storage unit 320 is a means for storing data used by controller 310. Auxiliary storage unit 320 is a flash memory or a hard disk, for example. Auxiliary storage unit 320 is capable of storing programs to be executed by controller 310 and data acquired via network communication unit 340 or terminal communication unit 350.

Disk drive unit 330 is a means for reading data stored in an optical disk or other optical storage medium. The optical disk may store data necessary for playing a game, such as a game program, for example.

Network communication unit 340 is a means for communicating via a network such as the Internet. The communication performed by network communication unit 340 may be wired or wireless communication. Network communication unit 340 receives data from an external server device or transmits data thereto in accordance with instructions from controller 310.

Terminal communication unit 350 is a means for communicating with controller 200. In a case where a controller other than controller 200 is used, terminal communication unit 350 may communicate with the other controller. The wireless communication performed by terminal communication unit 350 may utilize any communication technology such as Wi-Fi, Bluetooth, or infrared communication.

AV interface unit 360 is a means for supplying to monitor 100 image data, sound data, or the like. AV interface unit 360 includes one or more interfaces such as an HDMI (High-Definition Multimedia Interface) terminal or the like.

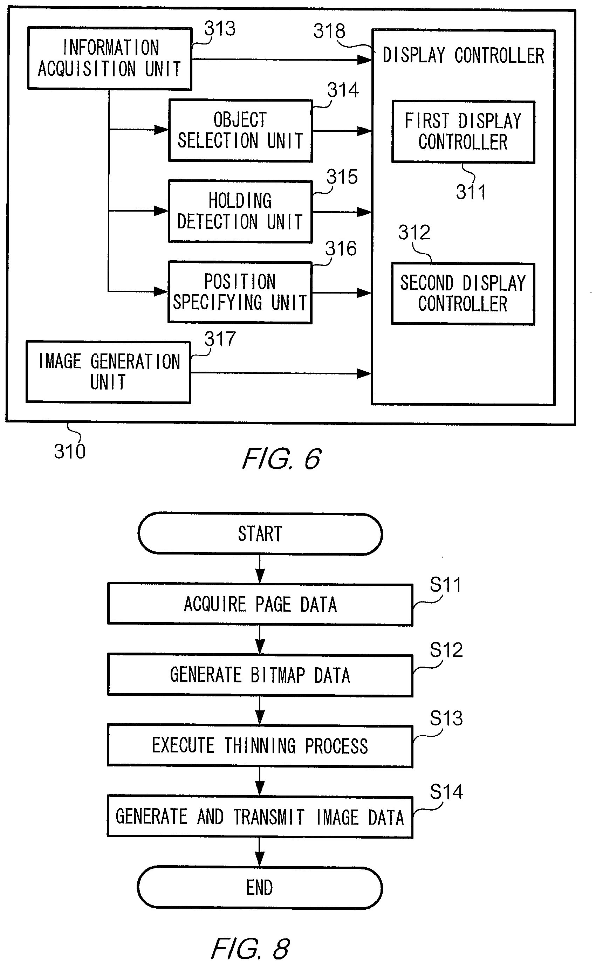

FIG. 6 is a block diagram (functional block diagram) showing a principal functional configuration of main device 300. As means for enabling display of images on monitor 100 and controller 200, main device 300 includes first display controller 311, second display controller 312, information acquisition unit 313, object selection unit 314, holding detection unit 315, position specifying unit 316, and image generation unit 317. The functions of these units are realized by execution of one or more programs by controller 310 of main device 300. Namely, the functions of these units are realized by a software process(es). In the following description, first display controller 311 and second display controller 312 may be referred to collectively as "display controller 318." Display controller 318 is a means for controlling display of images.

First display controller 311 is a means for controlling display of an image by monitor 100. First display controller 311 causes monitor 100 to display an image such as a webpage, and causes the image to be magnified or scrolled, as required. Scroll herein indicates a mode of display in which an image that is not displayed in its entirety in the display area is caused to move in a prescribed direction such that the portion that has not been displayed is visualized. In the present embodiment, "scroll" not only indicates movement of an image in an up-down direction (i.e., vertical direction) or left-right direction (i.e., horizontal direction), but also may include movement of an image in an oblique direction. Further, first display controller 311 has a function of causing monitor 100 to display a frame image (indicator image), which will be described later.

Second display controller 312 is a means for controlling display of an image by controller 200. Similarly to first display controller 311, second display controller 312 causes controller 200 to display an image such as a webpage, and causes the image to be magnified or scrolled, as required. When an operation for displaying a magnified image (hereinafter referred to as a "magnifying operation") is performed, second display controller 312 changes the magnification of the image accordingly. Namely, second display controller 312 selectively performs control for causing an image to be displayed with a predetermined magnification and control for causing a part of the image to be displayed with a magnification greater than the predetermined magnification. Further, second display controller 312 may cause controller 200 to display an image different from that caused to be displayed on monitor 100 by first display controller 311, though second display controller 312 may operate in cooperation with first display controller 311 such that the image displayed on monitor 100 and the image displayed on controller 200 have a prescribed relationship.

Information acquisition unit 313 is a means for acquiring information. The information acquired by information acquisition unit 313 includes operation information relating to an operation performed by a user. Operation information is information transmitted from controller 200 in response to a user operation. In addition to a state of pressing of respective buttons 261, operation information may include coordinate information provided by touch screen unit 250 and motion information provided by motion detection unit 270.

Object selection unit 314 is a means for selecting, in accordance with an operation by a user, an object included in an image displayed in the display area. An object herein is an item to be operated, and an image such as an icon, a button used in a GUI (Graphical User Interface), a scroll bar, or a widget (also referred to as a control) such as a text box may be an object. Further, a character may function as a selectable object. For example, in a case where the image displayed in the display area is a webpage, a string of characters functioning as a hyperlink may be an object. Object selection unit 314 selects an object based on the operation information acquired by information acquisition unit 313. It is to be noted that object selection unit 314 can make an object selectable in each of the states where controller 200 is displaying a magnified image and where controller 200 is not displaying a magnified image.

Further, when, after an object is caused to be in a selectable state, a user performs a predetermined operation for the object in the selectable state (such as pressing of a button), object selection unit 314 may select the object. It is to be noted here that an object in the selectable state is an object that is given input focus.

Display controller 318 (i.e., first display controller 311 and second display controller 312) can vary the image to be displayed in accordance with the operation information acquired by information acquisition unit 313 and/or the object selected by object selection unit 314. For example, in a state where a webpage is displayed, when an object included in the webpage and indicating a certain hyperlink is selected, first display controller 311 and second display controller 312 can cause monitor 100 and controller 200 to display another webpage indicated by the selected object.

Holding detection unit 315 is a means for detecting holding of controller 200 by a user. Holding detection unit 315 utilizes predetermined operation information to detect that the user is holding controller 200 in a prescribed manner. In this embodiment, when it is found that each of ZL button 261ZL and ZR button 261ZR is pressed, holding detection unit 315 detects that the user is holding controller 200 with both hands, as shown in FIG. 3.

Holding detection unit 315 may detect holding of controller 200 by a user based on another operation. For example, holding detection unit 315 may detect holding of controller 200 by a user based on pressing of L button 261L and R button 261L instead of based on pressing of ZL button 261ZL and ZR button 261ZR, or may detect holding of controller 200 when all of these four buttons are pressed. Further, instead of detecting pressing of a hardware key, holding detection unit 315 may detect holding of controller 200 by a user based on interaction with another sensor (e.g., touch sensor) by a user.

Position specifying unit 316 is a means for specifying a certain position in the image displayed on controller 200. The certain position here refers to a position of a portion of the image displayed on controller 200 that is to be magnified. In this exemplary embodiment, position specifying unit 316 can determine the position based on operation information input by the user. Further, position specifying unit 316 may also specify the position by referring to display position information, which will be described later.

Image generation unit 317 is a means for interpreting data of a webpage (hereinafter, "content") written in a markup language such as HTML (HyperText Markup Language), and generating bitmap data representing the webpage. In addition to the data of webpage itself, which is written in Markup Language, a content herein may include, style sheet, image data, script, and so on.

Image generation unit 317 acquires a content via network communication unit 340, determines an image to be displayed by, based on the content, arranging a character(s) and an image(s) and adjusting an appearance of the character(s), and generates bitmap data that represents the determined image as a bitmap image. Namely, image generation unit 317 has principal functions as a web browser (user agent, parser, and renderer). Image generation unit 317 records the bitmap data in a VRAM. When a webpage is displayed, first display controller 311 and second display controller 312 each read out from the VRAM the bitmap data thus generated by image generation unit 317, and cause the image to be displayed.

It is to be noted that main device 300 does not have to include every unit shown in FIG. 6. For example, in a case where the image to be displayed is not an image of a webpage, main device 300 does not have to include image generation unit 317. Further, in some cases, main device 300 does not have to include holding detection unit 315, as described later. Furthermore, main device 300 may realize the functions of the units shown in FIG. 6 by executing a single program or multiple programs. For example, the function of image generation unit 317 may be realized by execution of a program (browser program) that is different from the program(s) for realizing the functions of the other units.

The foregoing is a description of the configuration of display system 10. In this configuration, main device 300 causes at least one of monitor 100 and controller 200 to display an image. Depending on a user operation and/or a type of an image to be displayed, main device 300 may cause only one of monitor 100 and controller 200 to display an image or may cause each of monitor 100 and controller 200 to display an image. It is to be noted that, in a case where an image is displayed on each of monitor 100 and controller 200, main device 300 may cause the same image to be displayed on monitor 100 and controller 200, or may cause different images to be displayed on monitor 100 and controller 200.

For example, in a case where a game is played and there are multiple users such as family members or friends, a mode of use may be assumed in which a particular user views and operates controller 200, while the other users check the progress of the game using monitor 100. In such a case, if there are multiple controllers 100 or there is a controller(s) other than controller 200, multiple users can participate in the game.

Further, by using display system 10, a user not only can play a game but also can browse webpages. Moreover, a user may browse a captured images (moving images or still images) or electronic documents. In doing so, the user may display the image on each of monitor 100 and controller 200, or may display the image on only one of monitor 100 and controller 200.

In this exemplary embodiment, display system 10 can cause each of monitor 100 and controller 200 to display an image based on the same content. In doing so, display system 10 can operate in one of two operation modes: in one mode, the image displayed on monitor 100 is displayed in its entirety on controller 200; and in the other mode, a part of the image displayed on monitor 100 is magnified and displayed on controller 200. In the following description, the former operation mode will be referred to as a "normal-size mode" while the latter operation mode will be referred to as a "magnifying mode." There are multiple ways for magnification to be performed in the magnifying mode, as will be described in the following.

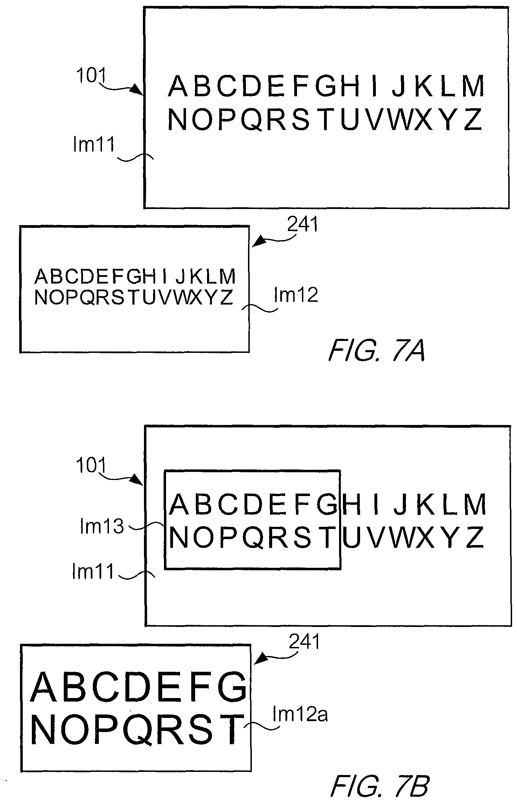

FIG. 7 is a diagram showing exemplary images displayed in each operation mode. FIG. 7A shows exemplary images displayed in the normal-size mode, while FIG. 7B shows exemplary images displayed in the magnifying mode. In the normal-size mode, display area 241 of controller 200 is caused to display image Im12, which is substantially the same as image Im11 displayed in display area 101 of monitor 100. These images may have slight differences in the extent of image displayed or an arrangement of items contained in the image, which can result from a difference in the aspect ratio or other features between display area 241 and display area 101. In the normal-size mode, the user can see substantially the same content, irrespective of whether the user views display area 241 or display area 101. However, since display area 241 and display area 101 have different sizes, image Im11 has a size larger than that of image Im12.

On the other hand, when the operation mode is switched from the normal-size mode to the magnifying mode, image Im12a, which is an image obtained by enlarging a part of image Im12 displayed in the normal-size mode, is caused to be displayed in region 241 of controller 200. Further, in the magnifying mode, frame image Im13 that indicates the position of image Im12a is caused to be displayed in display area 101 of monitor 100 in addition to image Im11. Frame image Im13 is an example of an indicator image of the invention. It is to be noted that, instead of frame image Im13, it is possible to use, as the indicator image, an image showing the area displayed on controller 100 with one or more dots, or an image that changes the color within the area from that of another area (e.g., an image highlighting the area or an image causing the area to flicker).

In the magnifying mode, the user can view a part of the image displayed on monitor 100 using controller 200. Namely, the user can view an entirety (or a large part) of the image with monitor 100, and at the same time, can view a specific part of the image in detail with controller 200, when necessary. In addition, since controller 200 is provided with a variety of operation means, the user can perform an appropriate operation while viewing the image in detail using controller 200.

It is assumed that in a normal mode of use of display system 10, the user of the system holds controller 200 at a position a certain distance from monitor 100 (several meters or more). In other words, controller 200 is closer to the user than monitor 100 is. Therefore, controller 200 is considered to be a device that is more convenient for the user to use to view the image in detail and to perform an operation, than monitor 100.

The following description describes an operation when a webpage is viewed, as an example of display performed by display system 10. In the following description, explanation may be given separately of the display control for monitor 100 and of the display control for controller 200 for the convenience of explanation. However, it is to be noted that, actually, the display control for monitor 100 and the display control for controller 200 are carried out in parallel.

FIG. 8 is a flowchart showing a basic process executed by main device 300 when causing controller 200 to display an image of a webpage. According to this process, main device 300 first acquires page data in accordance with an operation performed by a user (step S11). For example, when a user presses a certain key, controller 310 reads out a URL (Uniform Resource Locator) of a preset webpage, and acquires, via network communication unit 340, the content indicated by the URL.

Upon receipt of the page data, controller 310 generates bitmap data based on the page data (step S12). Controller 310 executes a process such as rendering to generate bitmap data, and stores the bitmap data temporarily in a VRAM.

Subsequently, controller 310 executes predetermined image processing on the bitmap data (step S13). Predetermined image processing here refers to image processing for displaying an image in accordance with the size of display area 241 of controller 200. In this exemplary embodiment, controller 310 performs a thinning process in which pixels constituting the bitmap data are thinned out to reduce the number of pixels. This thinning process may be performed by means of any known thinning technique for reducing bitmap data. For example, controller 310 may reduce the number of pixels in each of the vertical direction and the horizontal direction to 1/2 (1/n), so that the total number of pixels is reduced to 1/4 (1/n²).

Then, controller 310 generates image data based on the bitmap data after the thinning process has been performed, and transmits the image data to controller 200 via terminal communication unit 350 (step S14). Image data is data of an image and is obtained by compressing the bitmap data using a predetermined compressing technique. Further, the image data may include an image corresponding to an operation object, which will be described later. Upon receipt of the image data, controller 210 of controller 200 causes the corresponding webpage image to be displayed in display area 241.

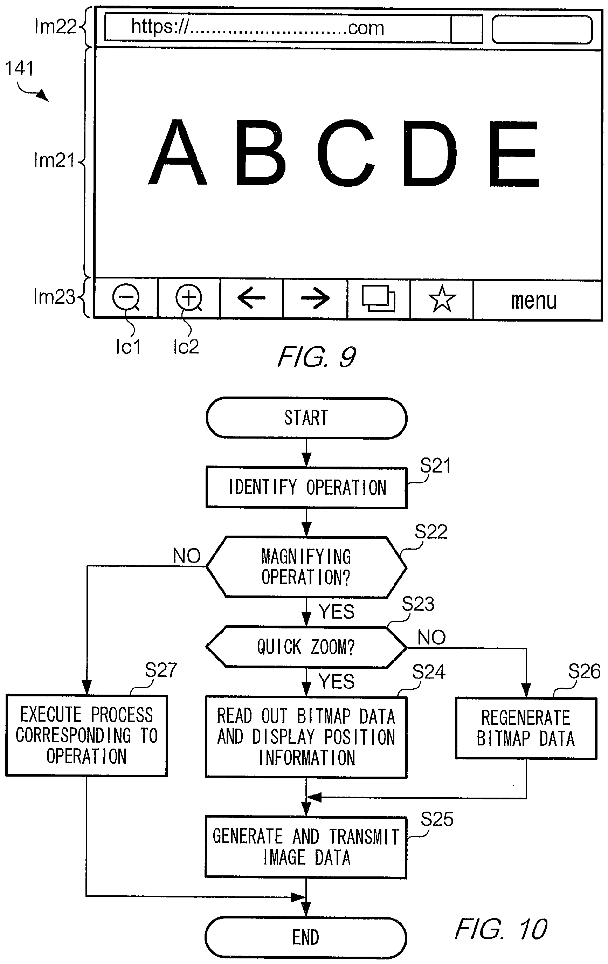

FIG. 9 is a diagram showing an exemplary image displayed on controller 200. In this example, controller 200 displays menu images Im22 and Im23 in addition to webpage image Im21. Menu images Im22 and Im23 are images for displaying the URL of the displayed webpage and a textbox for enabling search using a search engine, for example. Further, menu images Im22 and Im23 each include an operation object, which is an object selectable by a user by performing an operation on display area 241 (touch operation). In this embodiment, the operation objects include at least reduce icon Ic1, which is an icon for reducing webpage image Im21, and magnify icon Ic2, which is an icon for magnifying image Im21, though the operation objects may include, for example, an icon for displaying a bookmark(s) (URL of one or more pre-registered favorites) or an icon for causing the displayed webpage to go back to the previously displayed page, etc.

It is to be noted that the number and arrangement of operation objects are not particularly limited. For example, instead of being arranged at the top and the bottom like menu images Im22 and Im23, operation objects may be arranged on the left and right, or may be displayed collectively either at the top, at the bottom, on the left, or on the right. Further, display of an operation object is not mandatory.

In the following description, to distinguish from a magnified image, which will be described later, an image as shown in FIG. 9 (i.e., an image before magnifying) will be referred to as a "normal-size image." A normal-size image is an example of a "display image" relating to the present invention and an image that is displayed with a "first magnification."

Main device 300 causes controller 200 to display an image as described above, and also causes monitor 100 to display an image. Specifically, based on the same content from which the image displayed on controller 200 is derived, main device 300 generates image data to be provided to monitor 100 by performing a process similar to that shown in FIG. 8. However, in generating the image data to be provided to monitor 100, main device 100 does not perform the thinning process (step S13). In this way, an image having a larger size (or higher resolution) than that of the image displayed on controller 200 can be obtained easily.

It is to be noted that the image displayed on monitor 100 may include only image Im21 shown in FIG. 9 and does not have to include menu images Im22 and Im23. This is because display area 101 of monitor 100 may not be adapted to receive a user operation. However, it is also possible to cause menu images Im22 and Im23 to be displayed in display area 101.

When main device 300 causes monitor 100 and controller 200 to display an image as described in the foregoing, a state of display illustrated in FIG. 7A is achieved. In this state, the user can magnify and display a part of the normal-size image by operating controller 200 displaying the normal-size image. In this embodiment, there are two modes for magnifying the displayed image. In the first mode, when a predetermined key is pressed, the image is magnified and displayed with a predetermined magnification only while the key is pressed, and if the pressing of the key is terminated, the displayed image reverts to the normal-size image. This mode can be achieved by switching permission and prevention of execution of the thinning process. On the other hand, in the second mode, magnification (or reduction) is performed in steps, according to the number of pressing operations of the predetermined key. The second mode is designed to enable setting of the magnification more precisely than in the first mode.

In the following description, magnification or reduction in the first mode will be referred to as "quick zoom," and magnification or reduction in the second mode will be referred to as "step zoom." In this embodiment, quick zoom is carried out in response to pressing of Y button 261Y, while step zoom is carried out in response to pressing of reduce icon Ic1 or magnify icon Ic2. It is to be noted that these keys (hardware keys and software keys) are merely given as examples, and the keys for performing magnification or reduction may be other keys. For example, quick zoom may be performed in response to pressing of L button 261L or R button 261R, or may be performed in response to pressing of a predetermined icon (namely, a software key) provided in display area 241.

FIG. 10 is a flowchart showing an interruption process including a magnifying process. The process shown in FIG. 10 is an interruption process executed when a user operation is performed (i.e., operation information is acquired) in a state where a normal-size image is displayed. It is to be noted that, though user operations may include operations other than a magnifying operation for magnifying and displaying a normal-size image, explanation here will be given mainly of the process executed when the magnifying operation is performed, and explanation of the other processes may be omitted appropriately.

Upon acquisition of operation information, controller 310 of main device 300 identifies the operation indicated by the operation information (step S21). Then, controller 310 determines whether the identified operation is a magnifying operation (step S22). If the identified operation is not a magnifying operation, controller 310 executes a process corresponding to the identified operation (step S27). The process in step S27 may be a process of switching the displayed normal-size image page-by-page, for example.

Further, if the identified operation is a magnifying operation, controller 310 executes different processes depending on the operation. Specifically, controller 310 determines whether the magnifying operation is an operation for conducting quick zoom (i.e., operation of Y button 261Y) (step S23), and executes a process in accordance with the result of the determination.

If it is determined that an operation for quick zoom is performed, controller 310 reads out bitmap data that is stored in VRAM and that has not been subjected to the thinning process yet (i.e., bitmap data that has not been reduced), together with display position information representing a position of a portion of a normal-size image to be magnified and displayed (step S24), and, based on these data, generates image data and transmits the same (step S25). The process of step S25 is carried out in a manner similar to that of step S14, but differs in the point that the process of step S25 utilizes the display position information.

Display position information is information indicating which part of a normal-size image is to be magnified and displayed, and its initial value indicates a predetermined position (hereinafter, "initial position"). The initial position herein is a center of a normal-size image, though it may be an end portion of a normal-size image (e.g. an upper left end portion) or the like. As will be described later, display position information is changed as a result of scrolling of an image. Display position information is indicated by the coordinate of each of the vertices of a quadrangle corresponding to display area 241, for example, though it may be indicated by the coordinate of a specific vertex representing the vertices.

On the other hand, if it is determined that an operation for step zoom is performed, controller 310 regenerates bitmap data in accordance with a magnification by which the image is to be magnified (step S26). Namely, controller 310 again executes processes, such as rendering, based on the page data. Then, based on the regenerated bitmap data, controller 310 generates image data and transmits the same (step S25).

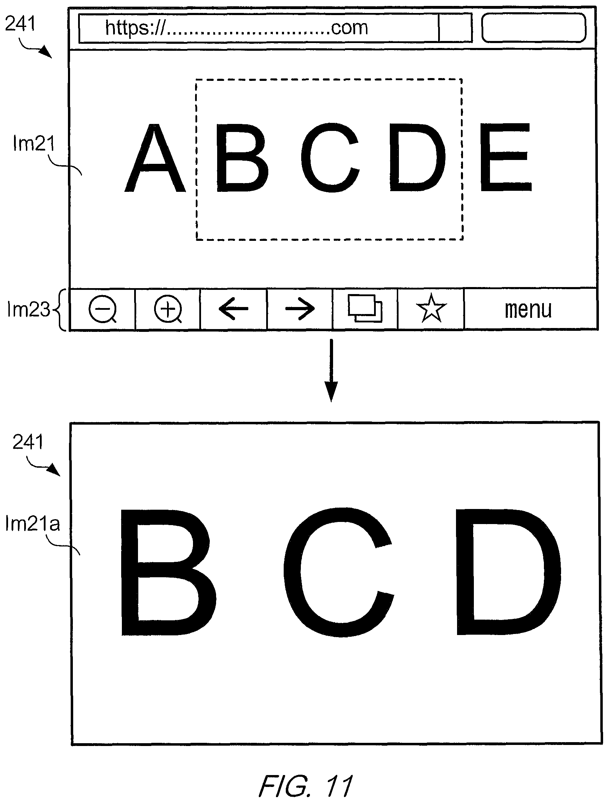

FIG. 11 is a diagram showing an exemplary image displayed when quick zoom is performed. FIG. 11 shows an image obtained when image Im21 shown in FIG. 9 is magnified and displayed. In the following description, image Im21a displayed at this time, i.e., an image obtained by magnifying a part of the normal-size image, will be referred to as a "magnified image." A magnified image is an example of a "partial image" in the present invention and an image displayed with a "second magnification." In this embodiment, a magnified image is displayed at four times the size of a normal-size image. It is to be noted that the rectangle shown by broken lines in FIG. 11 is a rectangle one quarter the size of display area 241, and is shown for reference.

When a magnified image is displayed, it is possible, as shown in FIG. 11, not to display menu images Im22 and Im23 shown in FIG. 9 (of course, it is also possible to display the menu images). By not displaying the operation object(s), a user can view the magnified image without a view being hindered by the operation object(s). It is considered that magnification of an image is performed mainly when a user wishes to view the image more in detail. Therefore, in such a case, it may be preferred that images other than the desired image (display image) are not displayed. Further, in the case where an operation object(s) is not displayed when a magnified image is displayed, an amount of an image displayed on the screen can be increased as compared to the case where the operation object(s) is displayed, which is convenient for a user. Particularly, in this embodiment, since the key for performing quick zoom is a hardware key and not a software key, it is possible not to display the operation objects at all when displaying a magnified image.

The mode of display when step zoom is performed is similar to that when quick zoom is performed. However, in the case where step zoom is performed, reduce icon Ic1 and magnify icon Ic2 may continue to be displayed. Further, it is preferred that the magnifications that can be adopted when step zoom is performed include magnifications other than the magnification for performing quick zoom (four times the normal-size image); for example, magnifications smaller than the magnification for quick zoom (1.2 times, 1.5 times, 2 times, etc.).

Since the magnified image is displayed as described in the foregoing, a user can view the magnified image in two ways. In the case where quick zoom is used, since the same data as the bitmap data used for displaying an image on monitor 100 is used, it is not necessary to execute processes for generating bitmap data (such as rendering) again, and therefore, it is possible to reduce the time required for displaying the image or the load on the hardware resources, as compared to the case where step zoom is used. On the other hand, when step zoom is used, a magnified image with a magnification not relying upon the number of pixels of the normal-size image can be displayed.

Furthermore, in this embodiment, it is possible to display a magnified image without requiring multiple presses or a long press of Y button 261Y, and hence, the time required for starting display of a magnified image can be reduced, as compared to the case where these operations are required for performing magnified display. Thus, combined with the feature of not requiring processes such as rendering, quick zoom of the present embodiment can achieve quick display of the magnified image. Further, the combination of quick zoom and step zoom allows a user to use selectively quick display of a magnified image and display of a magnified image with a smaller magnification.

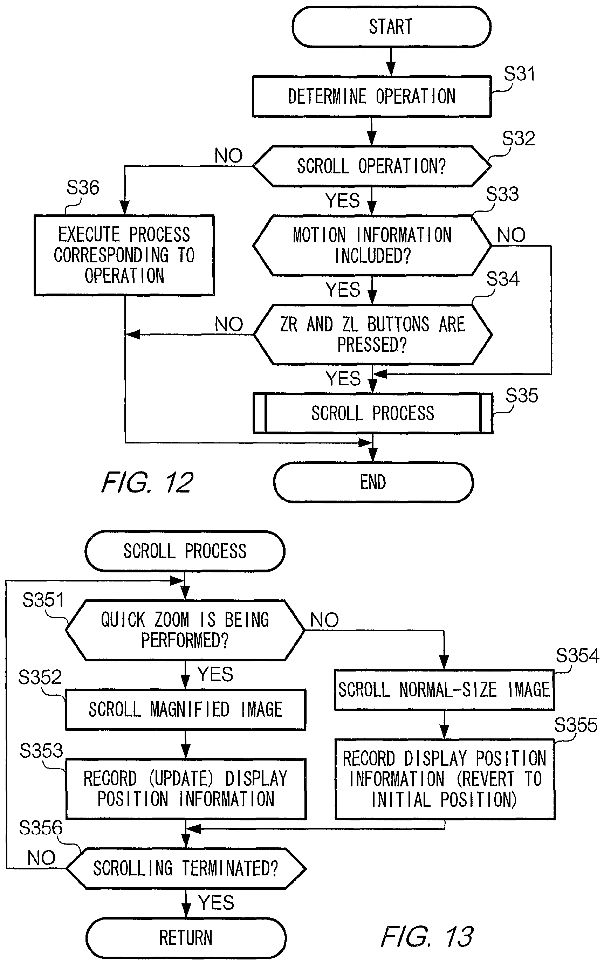

FIG. 12 is a flowchart showing an interruption process including a scrolling process. The process shown in FIG. 12 is an interruption process executed upon acquisition of operation information when a user performs an operation in a state where a normal-size image or a magnified image is displayed. Specifically, FIG. 12 shows a process when an operation for scrolling an image (hereinafter, "scroll operation") is performed as the user operation. The process shown in FIG. 12 may be incorporated into the process shown in FIG. 10, such that they are executed simultaneously in parallel.

In this embodiment, the scroll operation can be achieved by the following three ways of operation; the first operation is a touch operation on display area 241, the second operation is an operation using slide pad 262, and the third operation is an operation of moving controller 200. The third operation is processed, for example, in such a manner that, when a user moves controller 200 leftward, the image displayed in display area 241 is caused to move rightward so that the left-hand image that has been hidden comes into view. It is to be noted that the third operation may include scrolling of an image in response to inclination of controller 200 or varying an amount of scroll of an image in accordance with the velocity and/or acceleration given to controller 200.

It is also to be noted that the scroll operation does not have to be achieved by three ways of operation, and may be achieved by only one or two ways. Further, if there are multiple ways of scroll operation, it is preferred that an order of priority of operations should be predetermined to avoid conflict between operations. In the present embodiment, the operation information of a touch operation on display area 241 is given top priority (i.e., the highest priority), and the motion information is given the lowest priority. In this case, when controller 310 acquires the operation information of a touch operation and the motion information, controller 310 processes the former with priority. For example, if the operation information of a touch operation indicates leftward scrolling while the motion information indicates rightward scrolling, controller 310 determines that leftward scrolling should be performed.

Upon acquisition of operation information, controller 310 of main device 300 identifies the operation indicated by the operation information (step S31). This step is performed in a manner similar to that in step S21 shown in FIG. 10. Subsequently, controller 310 determines whether the identified operation is a scroll operation (step S32). In doing so, controller 310 determines whether one of the aforementioned first to third operations is performed.

If it is determined that an operation other than the scroll operation is performed, controller 310 executes a process corresponding to this operation (step S36). The process executed in step S36 may include the process executed when the magnifying operation is performed (see FIG. 10), for example, or may include another process. Since these processes are not directly relevant to scrolling of the screen, explanation thereof is omitted here.

If the identified operation is a scroll operation, controller 310 determines the type of scroll operation. Specifically, controller 310 determines whether the acquired operation information includes the motion information generated by motion detection unit 270 (step S33). If the operation information includes the motion information, controller 310 determines further whether the operation information includes operation information indicating that ZL button 261ZL and ZR button 261ZR are pressed (step S34).

It is to be noted that, instead of the process of step S34, or in addition to the process of step S34, controller 310 may determine whether the amount of motion (amount of movement, extent of inclination) indicated by the acquired motion information is equal to or greater than a predetermined amount, and may proceed to the process of step S35 if the amount of motion is equal to or greater than the predetermined amount. Namely, an operation of pressing of ZL button 261ZL and ZR button 261ZR may be dispensable. In other words, detection of holding by holding detection unit 315 is not mandatory.

Controller 310 executes a scroll process in the case where the operation information does not include motion information or in the case where the operation information includes motion information and ZL button 261ZL and ZR button 261ZR are pressed (step S35). On the other hand, in the case where the operation information includes motion information but ZL button 261ZL or ZR button 261ZR is not pressed, controller 310 does not perform the scroll process, and disregards the motion information. Namely, in this embodiment, the scroll operation indicated by the motion information is made effective by pressing of ZL button 261ZL and ZR button 261ZR, and is ineffective if these buttons are not pressed.

FIG. 13 is a flowchart showing the scroll process in step S35 in detail. In this scroll process, controller 310 first determines whether quick zoom is being performed by the user (step S351), and executes different processes depending on the result of this determination. Controller 310 makes this determination by determining whether Y button 261Y is pressed.

If it is determined that quick zoom is being performed, controller 310 causes the currently displayed magnified image to be scrolled in accordance with the scroll operation performed by the user (step S352). Then, controller 310 updates the recorded display position information in accordance with movement of the magnified image resulting from the scrolling (step S353). Specifically, controller 310 records, as the display position information, the position of the displayed magnified information in the normal-size image.

It is to be noted that the display position information recorded in step S353 will be read out in the aforementioned step S24 when an operation for quick zoom is performed again. In this way, controller 310 retains the display position of the magnified image when the magnifying operation is terminated (i.e., when the operation for quick zoom is terminated), so that when the magnifying operation is performed again without the scroll operation being performed after the retention of the display position, the magnified image at the previous display position can be displayed.

On the other hand, if it is determined that quick zoom is not being performed, controller 310 causes the currently displayed normal-size image to be scrolled in accordance with the scroll operation performed by the user (step S354). When the display of the normal-size image itself is changed, controller 310 changes the display position information, such that the position of the magnified information reverts to the predetermined initial position (step S355). The initial position is a central portion of the currently displayed normal-size image, for example. Therefore, the initial position changes in accordance with the scrolling of the normal-size image. Namely, relative to the currently displayed normal-size image, the initial position is a fixed position, but relative to the whole of the normal-size image (including the portion not displayed currently), the initial position is not necessarily a fixed position. For this reason, controller 310 records the display information position as a coordinate in the normal-size image.

After causing the normal-size image or the magnified image to scroll as described in the foregoing, controller 310 determines whether the scroll operation is terminated (step S356), and repeats the process from step S351 to S355 until the scroll operation is terminated. It is to be noted that, as is obvious from the description in FIG. 13, the user may start or terminate the magnifying operation during this repetition of the process.

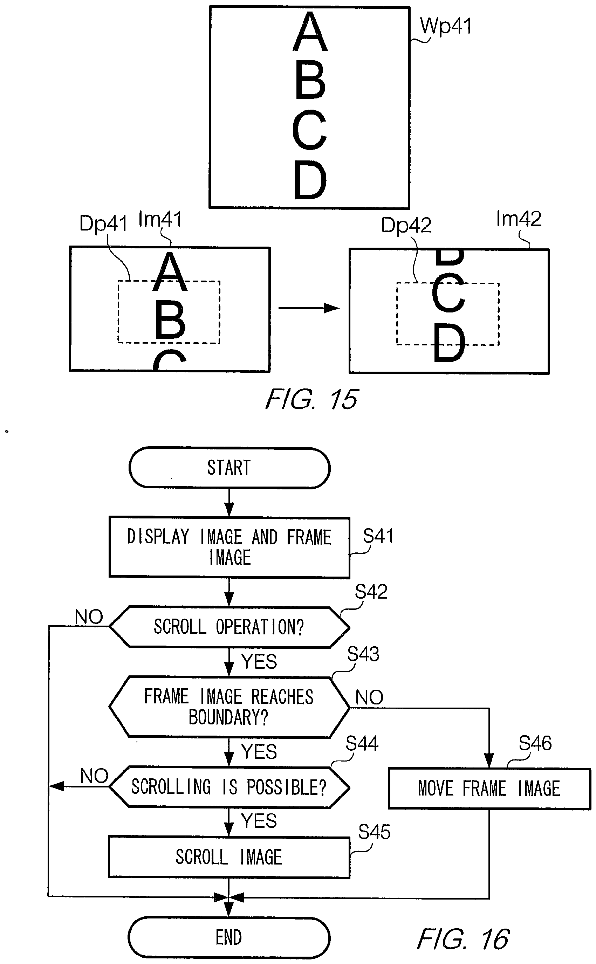

FIGS. 14 and 15 are each a diagram showing an example of a change of display position information resulting from scrolling, as described in the foregoing. FIG. 14 shows a change of display position information in the case where scrolling in the horizontal direction is performed while a magnified image is displayed (i.e., while quick zoom is performed). FIG. 15 shows a change of display position information in the case where scrolling in the vertical direction is performed while a normal-size image is displayed. It is to be noted that in the example of FIG. 15, it is assumed that the displayed webpage is long in the vertical direction, and only a part of the webpage is displayed in display area 241.

In FIG. 14, image Im31 represents a normal-size image. In this case, this means that, before a magnifying operation is performed, image Im31 is displayed in display area 241. Display positions Dp31 and Dp32 represent positions of the magnified image before and after scrolling, respectively. For example, in the state where the magnified image corresponding to display position Dp31 is displayed, when the user performs an operation for scrolling the image leftward, the display position of the magnified image is changed from display position Dp31 to display position Dp32. Controller 310 records the items of display position information representing these display positions. Namely, controller 310 records the display position information representing display position Dp31 before the leftward scroll operation, and records the display position information representing display position Dp32 after the scroll operation.

On the other hand, in FIG. 15, webpage Wp41 represents an entire webpage (one page). In this example, image Im41 represents a normal-size image displayed prior to the scroll operation, and image Im42 represents a normal-size image displayed after the scroll operation. Provided that the magnifying operation is not performed and the initial display position is the center of a normal-size image, the display position is represented by display position Dp41 in image Im41, and by display position Dp42 in image Im42. Namely, in response to the scroll operation, controller 310 changes the display position information such that only the position of the part to be magnified in the webpage changes but the position of the same relative to the normal-size image does not change. In this case, if the user performs the magnifying operation before the scroll operation, a magnified image corresponding to display position Dp41 is displayed in display area 241, and if the user performs the magnifying operation after the scroll operation, a magnified image corresponding to display position Dp42 is displayed in display area 241.

Since the scroll operation in this embodiment is performed as an operation independent of the magnifying operation, it is possible, for example, to start the magnifying operation while the scroll operation is performed, or to start the scroll operation while the magnifying operation is performed. Thus, the user can perform one of the two operations as necessary, irrespective of whether the other is being performed.

Further, the scroll operation of this embodiment requires pressing of ZL button 261ZL and ZR button 261ZR for the motion information generated by the motion detection unit 270 to be effective as the operation information indicating the scroll operation. Namely, ZL button 261ZL and ZR button 261ZR function as switches that can be pressed in this case, and only when the switches are on (pressed), scrolling of an image is carried out. As is described in the foregoing, when ZL button 261ZL and ZR button 261ZR are pressed using both hands, the user can hold controller 200 firmly, and thus, more precise motion information is acquired.

For example, if the user is allowed to operate controller 200 by a single hand, controller 200 tends to make an unintended motion (motion different from that intended for the scroll operation), and it becomes difficult to distinguish between the unintended motion and the motion for the scroll operation, which increases a possibility that unintended scrolling of an image is performed by the user. In contrast, if a rule is introduced that requires the user to press ZL button 261ZL and ZR button 261ZR when the scroll operation is performed, the user is prompted to hold controller 200 in a preferred way (see FIG. 3), and therefore, it can be expected that the possibility of erroneous detection of scroll operation by main device 300 will be reduced, as compared to the case where such a rule is not applied. It is to be noted that such an effect can also be achieved by requiring pressing of L button 261L and R button 261R instead of requiring pressing of ZL button 261ZL and ZR button 261ZR.

An image (normal-size image or magnified image) is displayed on controller 200, as described in the foregoing. When an image is displayed on controller 200, controller 310 changes an image displayed on monitor 100, as required. In the case where a normal-size image is displayed on controller 200, a similar image is caused to be displayed on monitor 100. Namely, in this case, where a normal-size image is displayed on controller 200, controller 310 causes the image displayed on monitor 100 to change, following a change in the normal-size image. For example, when a scroll operation is performed in a state where a normal-size image is displayed, controller 310 causes the image on monitor 100 to scroll in accordance with scrolling of the normal-size image (step S354).

On the other hand, in the case where a magnified image is displayed on controller 200, controller 310 causes an image to be displayed on monitor 100 in a manner different from that when a normal-size image is displayed on controller 200. Specifically, controller 310 controls display of an image in a manner corresponding to the position of the magnified image (or frame image) relative to the image displayed on monitor 100.

FIG. 16 is a flowchart showing a process executed by main device 300 when causing monitor 100 to display the frame image while the magnifying operation is performed. This process is executed by main device 300 repeatedly in parallel with the process for causing controller 200 to display an image (see FIG. 10), when the magnifying operation is performed. Namely, when this process is executed, controller 200 is displaying a magnified image.

In this process, controller 310 of main device 300 first causes a webpage image (display image) and a frame image to be displayed (step S41). Since controller 310 also conducts control for displaying an image on controller 200, controller 310 can specify the position of the image displayed on controller 200. Controller 310 specifies the position of the frame image by specifying the position of the image displayed on controller 200.

Then, controller 310 determines whether a scroll operation is performed via controller 200 (step S42). If it is found that the scroll operation is not performed, controller 310 terminates the process without causing the image to scroll. On the other hand, if it is found that the scroll operation is performed, controller 310 determines whether the frame image has reached the boundary of display area 101 in the direction in which the scroll operation is performed (step S43).

When the frame image has reached the boundary of display area 101, controller 310 determines whether scrolling is possible in the direction in which the scroll operation is performed (step S44). If further scrolling is not possible, such as when an end portion of the webpage is displayed in the display area 101, controller 310 terminates the process without causing the image to scroll. On the other hand, if further scrolling is possible, controller 310 causes the image displayed on monitor 100 to scroll in the direction in which the scroll operation is performed, so that an image other than the displayed image (i.e., a part of the image that has not been displayed up to this point) is displayed (step S45).

Further, if the frame image has not reached the boundary of display area 101, controller 310 causes the display position of the frame image to move without causing the webpage image displayed on monitor 100 to scroll (step S46). It is to be noted, however, that in this case also, scrolling of the image displayed on controller 200 is performed.

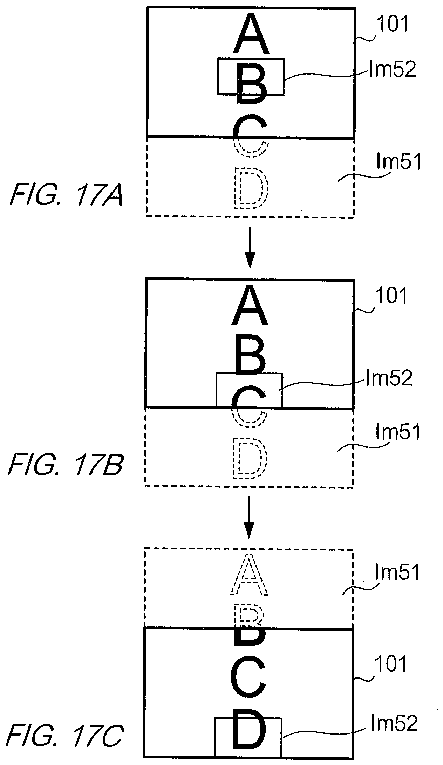

FIG. 17 is a diagram showing exemplary screen transitions on monitor 100. In this example, monitor 100 displays image Im51 of a webpage that is longer in the vertical direction than display area 101. In this drawing, the part of the webpage that is not displayed in display area 101 is shown by broken lines.

In the state shown in FIG. 17A, frame image Im52 is displayed at the center of display area 101. If, in this state, the user performs a scroll operation for downward scrolling, main device 300 causes the display position of frame image Im52 to move downward. At this time, main device 300 causes the image displayed in display area 241 of controller 200 to scroll in accordance with the movement of frame image Im52. If such a scroll operation is performed continuously, frame image Im52 will eventually reach the boundary of display area 101, as shown in FIG. 17B.

In the state shown in FIG. 17B where frame image Im52 has reached the boundary of display area 101, if a scroll operation for further downward scrolling is performed, main device 300 causes scrolling to start, so that the part of webpage image Im51 displayed in display area 101 changes. As a result of this, the part of image Im51 that has not thus far been displayed comes into view gradually. Thereafter, if the downward scroll operation is repeated and the lower end of the webpage has come into view, as shown in FIG. 17C, no further scrolling is performed.

In this exemplary embodiment, the user can cause the image displayed on monitor 100 to scroll as required, by performing a scroll operation for scrolling the image displayed on controller 200. Further, the user can see the part of the image that is not displayed in display area 241 of controller 200 by viewing the display area 101 of monitor 100, and can know the positional relationship between the image displayed in display area 101 and the image displayed in display area 241 by referring to the frame image.

### Modifications

The exemplary embodiment described in the foregoing is one embodiment for carrying out the present invention. The present invention is not limited to the exemplary embodiment, and can be carried out in other embodiments, as shown by the following modifications. It is to be noted that multiple modifications may be combined as required in carrying out the invention.

### Modification 1

In the present invention, a magnifying operation does not have to be performed to switch the operation mode when an image is displayed. It is also possible to set the operation mode in advance before an image is displayed. In this case, if the "magnifying mode" is set as the operation mode, the user can cause a magnified image (partial image) to be displayed on controller 100 as a default setting, without performing a magnifying operation.

### Modification 2

The configuration corresponding to holding detection unit 315 may be provided to controller 200, instead of main device 300. In this case, controller 200 may transmit data, such as a flag, that indicates detection of holding by the user to main device 300, though it is also possible that controller 200 transmits motion information to main device 300 when it detects holding by the user, and does not do so when holding by the user is not detected.

### Modification 3

Display area 101 of monitor 100 does not have to be larger than display area 241 of controller 200, and may be the same size as or smaller than display area 241. Further, the device (first display) corresponding to monitor 100 and the device (second display) corresponding to controller 200 may be connected to each other by wire, so long as they are configured as separate bodies.

### Modification 4

In the state where an unmagnified or magnified image is displayed in display area 241, the user can select an operation object displayed in display area 241. In other words, main device 300 can receive an operation for selecting an operation object in each of the state where the magnifying operation is being performed and the state where the magnifying operation is not being performed. The user may select an operation object by touching display area 241, though the user may select an operation object by performing another operation. For example, cross button 261D and A button 261A of controller 200 may be used as keys for selecting an operation object.

As a method for selecting an operation object using cross button 261D and A button 261A, for example, cross button 261D is used to switch a selection candidate among the operation objects, and A button 261A is used to select the selection candidate (namely, to confirm the operation object to be selected).

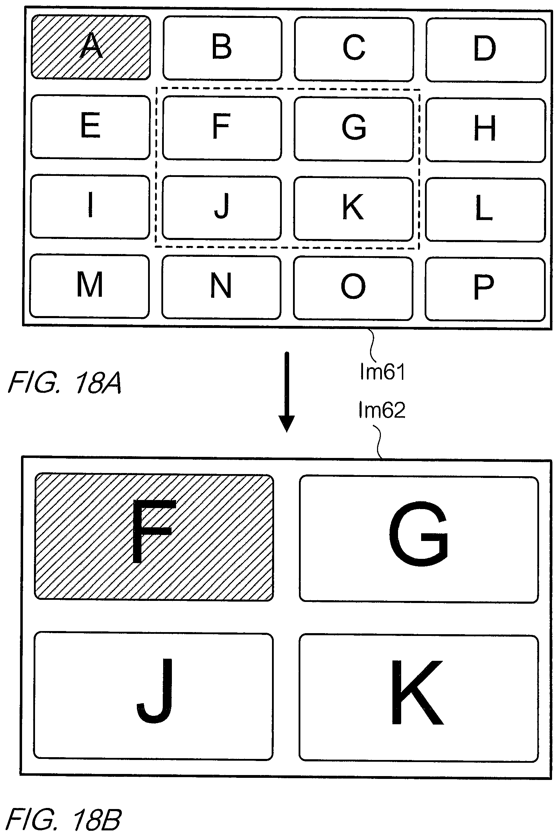

FIG. 18 is a diagram showing exemplary operation objects displayed in each of a normal-size image and a magnified image, and selection candidates thereof. In this drawing, each image denoted by one of the letters A-P is a selectable icon, and thus, an operation object. In this example, upon pressing of cross button 261D by the user, one of the operation objects is designated as the selection candidate following a predetermined rule. For example, as shown in the drawing, the upper left operation object in the display area 241 is designated as the first selection candidate. Thereafter, the user can move the selection candidate in the vertical and horizontal directions by pressing cross button 261D. For example, in the state shown in FIG. 18A, if the user instructs to move right once by using cross button 261D, the selection candidate is switched from icon "A" to icon "B."

On the other hand, FIG. 18B shows magnified image Im62 derived from normal-size image Im61 shown in FIG. 18A. When this magnified image Im62 is displayed, the icon designated as the first selection candidate is icon "F."

As is described in the foregoing, in the case where the magnifying operation is performed the first selection candidate may be different from that in the case where the magnifying operation is not performed. Further, the number of operation objects that can be selected may also be different. Therefore, in some cases, by performing the magnifying operation to cause a magnified image to be displayed, the user can select a desired operation object by carrying out fewer operations. For example, the minimum number of pressing operations of cross button 261D required for selecting icon "K" when the magnified image is displayed as shown in FIG. 18B, is smaller than that when the normal-size image is displayed as shown in FIG. 18A, and therefore, in this case, it is preferable to perform the magnifying operation before operating cross button 261D. On the other hand, in cases such as when availability of information at a glance is desired or when the desired operation object has not been determined, operating cross button 261D without performing the magnifying operation may be preferred.

In this example, cross button 261D may also be used for performing the scroll operation. For example, it is possible that, when the user instructs "upward" using cross button 261D in the state shown in FIG. 18B, magnified image Im62 is caused to scroll, so that icons "J" and "K" disappear from view while icons "B" and "C" come into view.

### Modification 5

Like image Im12 shown in FIG. 7, the normal-size image displayed on controller 200 may be the same image as image Im11 displayed in display area 101 of monitor 100, or may be an image different from image Im11. For example, the normal-size image displayed on controller 200 may be a part of image Im11 displayed in display area 101 of monitor 100. In this case, main device 300 may cause the indicator image (frame image) to be displayed not only when the magnifying operation is performed but also when it is not.

Namely, the normal-size image displayed in display area 241 does not have to have the same magnification (or the same size) as that of the image displayed in display area 101 of monitor 100. The term "unmagnified" of the normal-size image means that the image is unmagnified compared to a magnified image, and does not refer to comparison with the image displayed on monitor 100. It is to be noted that the magnification of the displayed image is represented relative to the normal-size image displayed on controller 200, though it is also possible to represent the magnification relative to the image displayed on monitor 100.

### Modification 6

Main device 300 may magnify not only the image displayed on controller 200 but also the image displayed on monitor 100, as required. For example, in response to a magnifying operation, main device 300 may magnify the image displayed on monitor 100 in accordance with the image displayed on controller 200.

### Modification 7

The operation that causes the position indicated by the display position information to revert to the initial position is not limited to the scroll operation. For example, controller 310 may cause the position indicated by the display position information to revert to the initial position in such cases as when an operation object such as a hyperlink is selected or when an icon displayed in menu images Im22 and Im23 is selected.

### Modification 8

The present invention does not have to be carried out in main device 300, an information-processing system including main device 300 and controller 200, or an information-processing system (display system 10) further including monitor 100, but also may be carried out in a device including integrally a configuration corresponding to main device 300 and a configuration corresponding to controller 200. Alternatively, the present invention may be configured such that part or all of the control relating to the present invention (namely, control such as that performed by first display controller 311 and second display controller 312) is performed by monitor 100 and controller 200, or may be configured such that the display control for the devices is performed by each device, whereby a configuration corresponding to main device 300 is omitted. Furthermore, the device of the present invention does not have to be of a shape to be held with both hands, but may be of such a shape that it is to be held with a single hand, or may be adapted to be placed on a desk or the like when operated. The controller of the present invention does not have to have a game function.

Further, the present invention may be carried out not only as a controller or an information-processing system as described in the foregoing, but also as an image-displaying method for causing a device to display a magnified image (partial image) or an information-processing program for executing such an image-displaying method. Furthermore, the information-processing program of the present invention may be stored in a storage medium such as an optical disk or a semiconductor memory, or may be downloaded to an information-processing device via a network such as the Internet.

The foregoing description of the embodiments of the present invention is provided for purposes of illustration and description, and is in no way to be taken as either exhaustive or specifically limitative of the present invention; and it will be obvious to those skilled in the art that a wide range of modifications and variations can be applied to the invention described in the exemplified embodiments, with such embodiments having been chosen merely with a view to providing a clear explanation of the principles of the present invention and its range of practical application, thereby to enable others skilled in the art to understand the invention in the context of a variety of embodiments, which can be adopted in the scope of the invention so as to best suit a contemplated use. The scope of the invention is defined by the claims.

## Claims

1. An information-processing system comprising:
a first display (101);
a second display (241), which is a device separate from the first display; and
a controller (300) that is configured to control the first display and the second display,
wherein the controller comprises:
a first display controller (311) that is configured to control the first display to display a first image (Im11) in accordance with image data; a second display controller (312) that is configured to control the second display to display selectively the first image (Im12) having a first magnification, or a second image (IM12a) that is a partial image of the first image and has a second magnification greater than the first magnification; and
a position specifying unit (316) that is configured to specify a position of the partial image in the first image displayed on the second display, wherein:
in response to the second image being displayed on the second display by the second display controller, the first display controller is configured to control the first display to display additionally an indicator image (Im13) indicating the position of the partial image in the first image; and
the first display controller is configured to control the displayed indicator image to move in a prescribed direction in accordance with the position specified by the position specifying unit of the second image on the second display,
wherein the second display controller:
in response to being in a state where the first image is displayed on the second display, a magnifying operation for magnifying the first image to display the second image is performed, is configured to control the second image to be displayed on the second display;
in response to being in a state where the second image is displayed transitioning to a state where another image including the second image is displayed, is configured to retain a position of the second image in the other image;
in response to the magnifying operation being performed again after retention of the position, is configured to control the second image at the retained position to be displayed on the second display,
in response to a predetermined operation being performed by a user in a state where the first image is displayed on the second display, is configured to control the retained position to revert to a predetermined initial position, and
in response to an operation for scrolling the first image displayed on the first display or the second display being performed by a user in a state where the first image is displayed on the second display, is configured to control the retained position to revert to the predetermined initial position.

2. The information-processing system according to claim 1, wherein the second display controller is configured to control the second image displayed on the second display to scroll in accordance with the position specified by the position specifying unit.

3. The information-processing system according to claim 1 or 2, further comprising a motion detection unit (270) that detects a motion of the second display, wherein the position specifying unit specifies the position of the second image based on the motion detected by the motion detection unit.

4. The information-processing system according to claim 3, further comprising a holding detection unit (315) that detects holding of the second display by a user, wherein the position specifying unit specifies the position of the second image based on the motion detected by the motion detection unit in a case where holding of the second display by the user is detected by the holding detection unit.

5. The information-processing system according to any one of claims 1 to 4, wherein, in response to the indicator image reaching a boundary of a display area of the first display, the first display controller is configured to control an image other than the first image displayed in the display area to be displayed.

6. The information-processing system according to any one of claims 1 to 5, wherein
in response to causing the second display to display the second image with the second magnification, the second display controller uses bitmap data that is used when the first display controller is configured to control the first image to be displayed, and
in response to causing the second display to display the first image with the first magnification, the second display controller uses the bitmap data with a reduced number of pixels.

7. The information-processing system according to any one of claims 1 to 6, wherein in response to the first image being displayed, the second display controller is configured to control an object for performing an operation relating to the first image to be displayed, and in response to the second image being displayed, the second display controller is configured to control the object not to be displayed.

8. The information-processing system according to any one of claims 1 to 7, wherein the controller comprises an object selection unit (314) that, in response to the second display controller being configured to control the second image to be displayed, makes an object in the second image selectable in response to a predetermined operation by a user.

9. An image-displaying method for an information processing system comprising a first display (101) controlled by a first display controller (311) and a second display (241) controlled by a second display controller (312), the method comprising:
causing the first display to display a first image;
causing the second display, which is a device separate from the first display, to display selectively the first image having a first magnification, or a second image which is a partial image of the first image and has a second magnification greater than the first magnification
specifying by a position specifying unit (316) of the information processing system a position of the partial image in the first image displayed on the second display, wherein:
in response to the second image being displayed on the second display, controlling the first display to display additionally an indicator image (Im13) indicating the position of the second image in the first image;
controlling the displayed indicator image to move in a prescribed direction in accordance with the specified position of the second image on the second display; and wherein,
in response to a magnifying operation for magnifying the first image displayed on the second display, displaying the second image on the second display;
in response to transitioning from a state where the second image is displayed to a state where another image including the second image which is displayed, retaining a position of the second image in the other image;
in response to the magnifying operation being performed again after retention of the position, displaying the second image at the retained position on the second display;
in response to a predetermined operation being performed by a user in a state where the first image is displayed on the second display, reverting the retained position to a predetermined initial position; and
in response to an operation for scrolling the first image displayed on the first display or the second display being performed by a user in a state where the first image is displayed on the second display, reverting the retained position to the predetermined initial position.

10. A computer program product comprising instructions which, when executed by a computer of an information processing system comprising a first display (101) and a second display (241), control the computer to execute:
causing the first display to display a first image;
causing the second display, which is a device separate from the first display, to display selectively the first image having a first magnification, or a second image which is a partial image of the first image and has a second magnification greater than the first magnification;
specifying a position of the partial image in the first image displayed on the second display, wherein:
in response to the second image being displayed on the second display, controlling the first display to display additionally an indicator image (Im13) indicating the position of the second image in the first image;
controlling the displayed indicator image to move in a prescribed direction in accordance with the specified position of the second image on the second display; and wherein
in response to a magnifying operation for magnifying the first image displayed on the second display, displaying the second image on the second display;
in response to transitioning from a state where the second image is displayed to a state where another image including the second image which is displayed, retaining a position of the second image in the other image;
in response to the magnifying operation being performed again after retention of the position, displaying the second image at the retained position on the second display;
in response to a predetermined operation being performed by a user in a state where the first image is displayed on the second display, reverting the retained position to a predetermined initial position; and
in response to an operation for scrolling the first image displayed on the first display or the second display being performed by a user in a state where the first image is displayed on the second display, reverting the retained position to the predetermined initial position.

## Patentansprüche

1. Informationsverarbeitungssystem enthaltend:
eine erste Anzeige (101);
eine zweite Anzeige (241), die ein von der ersten Anzeige separates Gerät ist; und
ein Controller (300), der konfiguriert ist zum Steuern der ersten Anzeige und der zweiten Anzeige,
worin der Controller enthält:
einen ersten Anzeige-Controller (311), der konfiguriert ist zum Steuern, dass die erste Anzeige ein erstes Bild (Im11) gemäß Bilddaten anzeigt;
einen zweiten Anzeige-Controller (312), der konfiguriert ist zum Steuern, dass die zweite Anzeige selektiv das erste Bild (Im12) anzeigt, das eine erste Vergrößerung aufweist, oder ein zweites Bild (Im12a), das ein Teilbild des ersten Bildes ist und eine zweite Vergrößerung aufweist, die größer ist als die erste Vergrößerung; und
eine Positionsspezifizierungseinheit (316), die konfiguriert ist zum Spezifizieren einer Position des Teilbildes im ersten Bild, das auf der zweiten Anzeige angezeigt ist, worin:
als Reaktion auf das Anzeigen des zweiten Bildes auf der zweiten Anzeige durch den zweiten Anzeige-Controller, der erste Anzeige-Controller konfiguriert ist zum Steuern, dass die erste Anzeige zusätzlich ein Indikatorbild (Im13) anzeigt, das die Position des Teilbildes im ersten Bild angibt; und
der erste Anzeige-Controller konfiguriert ist zum Steuern, dass sich das angezeigte Indikatorbild in eine vorbestimmte Richtung bewegt gemäß der Position, die von der Positionsspezifizierungseinheit des zweiten Bildes auf der zweiten Anzeige spezifiziert ist,
worin der zweite Anzeige-Controller:
als Reaktion, wenn in einem Zustand, in dem das erste Bild auf der zweiten Anzeige angezeigt wird, eine Vergrößerungsoperation durchgeführt wird, um das erste Bild zur Anzeige des zweiten Bildes zu vergrößern, konfiguriert ist zum Steuern, dass das zweite Bild auf der zweiten Anzeige angezeigt wird;
als Reaktion in einem Zustand, in dem das zweite Bild während des Übergangs zu einem Zustand angezeigt wird, in dem ein anderes Bild einschließlich des zweiten Bildes angezeigt wird, konfiguriert ist, dass eine Position des zweiten Bildes in dem anderen Bild beibehalten wird;
als Reaktion auf das erneute Durchführen der Vergrößerungsoperation, nach dem Beibehalten der Position, konfiguriert ist zum Steuern, dass das zweite Bild an der beibehaltenen Position auf der zweiten Anzeige angezeigt wird,
als Reaktion auf eine vorbestimmte Operation, die von einem Benutzer in einem Zustand durchgeführt wird, in dem das erste Bild auf der zweiten Anzeige angezeigt wird, konfiguriert ist zum Steuern, dass die beibehaltene Position zu einer vorbestimmten Anfangsposition zurückkehrt, und
als Reaktion auf eine Operation zum Scrollen des ersten Bildes, das auf der ersten Anzeige oder der zweiten Anzeige angezeigt wird, die von einem Benutzer in einem Zustand durchgeführt wird, in dem das erste Bild auf der zweiten Anzeige angezeigt wird, konfiguriert ist zum Steuern, dass die beibehaltene Position zur vorbestimmten Anfangsposition zurückgekehrt.

2. Informationsverarbeitungssystem gemäß Anspruch 1, worin der zweite Anzeige-Controller konfiguriert ist zum Steuern, dass das zweite Bild, das auf der zweiten Anzeige angezeigt ist, gescrollt wird gemäß der Position, die von der Positionsspezifizierungseinheit spezifiziert wird.

3. Informationsverarbeitungssystem gemäß Anspruch 1 oder 2, weiter enthaltend eine Bewegungs-Detektionseinheit (270), die eine Bewegung der zweiten Anzeige feststellt, worin die Positionsspezifizierungseinheit die Position des zweiten Bildes spezifiziert basierend auf der Bewegung, die von der Bewegungs-Detektionseinheit festgestellt wurde.

4. Informationsverarbeitungssystem gemäß Anspruch 3, weiter enthaltend eine Halte-Detektionseinheit (315), die das Halten der zweiten Anzeige durch einen Benutzer feststellt, worin die Positionsspezifizierungseinheit die Position des zweiten Bildes spezifiziert, basierend auf der Bewegung, die von der Bewegungs-Detektionseinheit festgestellt wurde für den Fall, dass das Halten der zweiten Anzeige durch den Benutzer durch die Halte-Detektionseinheit festgestellt wird.

5. Informationsverarbeitungssystem gemäß einem der Ansprüche 1 bis 4, worin, als Reaktion, dass das Indikatorbild eine Begrenzung der Anzeigefläche der ersten Anzeige erreicht, der erste Anzeige-Controller konfiguriert ist zum Steuern, dass ein Bild angezeigt wird, das nicht das erste Bild ist, das im Anzeigebereich angezeigt wird.

6. Informationsverarbeitungssystem gemäß einem der Ansprüche 1 bis 5, worin
als Reaktion darauf, dass die zweite Anzeige veranlasst wird, das zweite Bild mit der zweiten Vergrößerung anzuzeigen, verwendet der zweite Anzeige-Controller Bitmap-Daten, die benutzt werden, wenn der erste Anzeige-Controller konfiguriert ist zum Steuern, dass das erste Bild angezeigt wird, und
als Reaktion auf darauf, dass die zweite Anzeige veranlasst wird, das erste Bild mit der ersten Vergrößerung anzuzeigen, verwendet der zweite Anzeige-Controller die Bitmap-Daten mit einer reduzierten Anzahl von Pixeln.

7. Informationsverarbeitungssystem gemäß einem der Ansprüche 1 bis 6, worin als Reaktion auf das Anzeigen des ersten Bildes, der zweite Anzeige-Controller konfiguriert ist zum Steuern, dass ein Objekt zum Durchführen einer Operation, die sich auf das erste Bild bezieht, angezeigt wird und als Reaktion auf das Anzeigen des zweiten Bildes, der zweite Anzeige-Controller konfiguriert ist zum Steuern, dass das Objekt nicht angezeigt wird.

8. Informationsverarbeitungssystem gemäß einem der Ansprüche 1 bis 7, worin der Controller eine Objektauswahleinheit (314) aufweist, die, als Reaktion darauf, dass der zweite Anzeige-Controller konfiguriert ist zum Steuern, dass das zweite Bild angezeigt wird, ein Objekt im zweiten Bild auswählbar macht in Reaktion auf eine vorbestimmte Operation eines Benutzers.

9. Bildanzeigeverfahren für ein Informationsverarbeitungssystem, das eine erste Anzeige (101) aufweist, die von einem ersten Anzeige-Controller (311) gesteuert wird, und eine zweite Anzeige (241), die von einem zweiten Anzeige-Controller (312) gesteuert wird, wobei das Verfahren enthält:
Veranlassen der ersten Anzeige, ein erstes Bild anzuzeigen;
Veranlassen der zweiten Anzeige, die ein von der ersten Anzeige separates Gerät ist, selektiv das erste Bild anzuzeigen, das eine erste Vergrößerung aufweist oder ein zweites Bild, das ein Teilbild des ersten Bildes ist und eine zweite Vergrößerung aufweist, die größer ist als die erste Vergrößerung;
Spezifizieren durch eine Positionsspezifizierungseinheit (316) des Informationsverarbeitungssystems einer Position des Teilbildes im ersten Bild, das auf der zweiten Anzeige angezeigt ist, worin:
als Reaktion auf das Anzeigen des zweiten Bildes auf der zweiten Anzeige, Steuern, dass die erste Anzeige zusätzlich ein Indikatorbild (Im13) anzeigt, das die Position des Teilbildes im ersten Bild angibt;
Steuern, dass sich das angezeigte Indikatorbild in eine vorbestimmte Richtung bewegt gemäß der spezifizierten Position des zweiten Bildes auf der zweiten Anzeige; und worin
als Reaktion auf eine Vergrößerungsoperation zum Vergrößern des ersten Bildes, das auf der zweiten Anzeige angezeigt ist, Anzeigen des zweiten Bildes auf der zweiten Anzeige;
als Reaktion auf das Übergehen von einem Zustand, in dem das zweite Bild angezeigt wird zu einem Zustand, in dem ein anderes Bild einschließlich des zweiten Bildes angezeigt wird, Beibehalten einer Position des zweiten Bildes in dem anderen Bild;
als Reaktion auf das erneute Durchführen der Vergrößerungsoperation, nach dem Beibehalten der Position, Anzeigen des zweiten Bildes an der beibehaltenen Position auf der zweiten Anzeige,
als Reaktion auf eine vorbestimmte Operation, die von einem Benutzer in einem Zustand durchgeführt wird, in dem das erste Bild auf der zweiten Anzeige angezeigt wird, Zurückführen der beibehalten Position zu einer vorbestimmten Anfangsposition, und
als Reaktion auf eine Operation zum Scrollen des ersten Bildes, das auf der ersten Anzeige oder der zweiten Anzeige angezeigt wird, die von einem Benutzer in einem Zustand durchgeführt wird, in dem das erste Bild auf der zweiten Anzeige angezeigt wird, Zurückführen der beibehaltenen Position zur vorbestimmten Anfangsposition.

10. Computerprogramm-Produkt enthaltend Instruktionen die, wenn sie durch einen Computer eines Informationsverarbeitungssystems ausgeführt werden, das eine erste Anzeige (101) und eine zweite Anzeige (241) enthält, den Computer steuern, um auszuführen:
Veranlassen der ersten Anzeige, ein erstes Bild anzuzeigen;
Veranlassen der zweiten Anzeige, die ein von der ersten Anzeige separates Gerät ist, selektiv das erste Bild anzuzeigen, das eine erste Vergrößerung aufweist oder ein zweites Bild, das ein Teilbild des ersten Bildes ist und eine zweite Vergrößerung aufweist, die größer ist als die erste Vergrößerung;
Spezifizieren einer Position des Teilbildes im ersten Bild, das auf der zweiten Anzeige angezeigt ist, worin:
als Reaktion auf das Anzeigen des zweiten Bildes auf der zweiten Anzeige Steuern, dass die erste Anzeige zusätzlich ein Indikatorbild (Im13) anzeigt, das die Position des Teilbildes im ersten Bild angibt;
Steuern, dass sich das angezeigte Indikatorbild in eine vorbestimmte Richtung bewegt gemäß der spezifizierten Position des zweiten Bildes auf der zweiten Anzeige; und worin
als Reaktion auf eine Vergrößerungsoperation zum Vergrößern des ersten Bildes, das auf der zweiten Anzeige angezeigt ist, Anzeigen des zweiten Bildes auf der zweiten Anzeige;
als Reaktion auf das Übergehen von einem Zustand, in dem das zweite Bild angezeigt wird zu einem Zustand, in dem ein anderes Bild einschließlich des zweiten Bildes angezeigt wird, Beibehalten einer Position des zweiten Bildes in dem anderen Bild;
als Reaktion auf das erneute Durchführen der Vergrößerungsoperation, nach dem Beibehalten der Position, Anzeigen des zweiten Bildes an der beibehaltenen Position auf der zweiten Anzeige,
als Reaktion auf eine vorbestimmte Operation, die von einem Benutzer in einem Zustand durchgeführt wird, in dem das erste Bild auf der zweiten Anzeige angezeigt wird, Zurückführen der beibehalten Position zu einer vorbestimmten Anfangsposition, und
als Reaktion auf eine Operation zum Scrollen des ersten Bildes, das auf der ersten Anzeige oder der zweiten Anzeige angezeigt wird, die von einem Benutzer in einem Zustand durchgeführt wird, in dem das erste Bild auf der zweiten Anzeige angezeigt wird, Zurückführen der beibehaltenen Position zur vorbestimmten Anfangsposition.

## Revendications

1. Un système de traitement de l'information comprenant :
un premier afficheur (101) ;
un second afficheur (241), qui est un dispositif distinct du premier afficheur ; et
un contrôleur (300) qui est configuré pour contrôler le premier afficheur et le second afficheur,
dans lequel le contrôleur comprend :
un premier contrôleur d'affichage (311) qui est configuré pour contrôler le premier afficheur pour qu'il affiche une première image (Im11) en fonction de données d'image ;
un second contrôleur d'affichage (312) qui est configuré pour contrôler le second afficheur pour qu'il affiche sélectivement la première image (Im12) avec un premier grossissement, ou une seconde image (Im12a) qui est une image partielle de la première image et présente un second grossissement supérieur au premier grossissement ; et
une unité de spécification de position (316) qui est configurée pour spécifier une position de l'image partielle dans la première image affichée sur le second afficheur, où :
en réponse à l'affichage de la seconde image sur le second afficheur par le second contrôleur d'affichage, le premier contrôleur d'affichage est configuré pour contrôler le premier afficheur pour qu'il affiche en plus une image d'indicateur (Im13) indiquant la position de l'image partielle dans la première image ; et
le premier contrôleur d'affichage est configuré pour contrôler l'image d'indicateur affichée pour la déplacer dans une direction prescrite en fonction de la position spécifiée par l'unité de spécification de position de la seconde image sur le second afficheur,
dans lequel le second contrôleur d'affichage :
en réponse au fait d'être dans un état où la première image est affichée sur le second afficheur, une opération de grossissement pour grossir la première image pour afficher la seconde image est exécutée, est configuré pour contrôler la seconde image à afficher sur le second afficheur ;
en réponse au fait d'être dans un état où la seconde image est affichée en transition vers un état où une autre image contenant la seconde image est affichée, est configuré pour retenir une position de la seconde image dans l'autre image ;
en réponse à l'exécution à nouveau de l'opération de grossissement après retenue de la position, est configuré pour contrôler la seconde image au niveau de la position retenue pour être affichée sur le second afficheur,
en réponse à l'exécution d'une opération prédéterminée par un utilisateur dans un état où la première image est affichée sur le second afficheur, est configuré pour contrôler la position retenue pour revenir à une position initiale prédéterminée, et
en réponse à l'exécution d'une opération pour faire défiler la première image affichée sur le premier afficheur ou le second afficheur par un utilisateur dans un état où la première image est affichée sur le second afficheur, est configuré pour contrôler la position retenue pour revenir à la position initiale prédéterminée.

2. Le système de traitement de l'information selon la revendication 1, dans lequel le second contrôleur d'affichage est configuré pour contrôler la seconde image affichée sur le second afficheur pour la faire défiler en fonction de la position spécifiée par l'unité de spécification de position.

3. Le système de traitement de l'information selon la revendication 1 ou 2, comprenant en outre une unité de détection de mouvement (270) qui détecte un mouvement du second afficheur, l'unité de spécification de position spécifiant la position de la seconde image sur la base du mouvement détecté par l'unité de détection de mouvement.

4. Le système de traitement de l'information selon la revendication 3, comprenant une unité de détection de maintien (315) qui détecte le maintien du second afficheur par un utilisateur, l'unité de spécification de position spécifiant la position de la seconde image sur la base du mouvement détecté par l'unité de détection de mouvement dans un cas où le maintien du second afficheur par l'utilisateur est détecté par l'unité de détection de maintien.

5. Le système de traitement de l'information selon l'une quelconque des revendications 1 à 4 dans lequel, en réponse à l'atteinte par l'image de l'indicateur d'une frontière d'une zone d'affichage du premier afficheur, le premier contrôleur d'affichage est configuré pour contrôler une image autre que la première image affichée dans la zone d'affichage pour qu'elle soit affichée.

6. Le système de traitement de l'information selon l'une quelconque des revendications 1 à 5, dans lequel en réponse au fait de faire afficher par le second afficheur la seconde image avec le second grossissement, le second contrôleur d'affichage utilise des données bitmap qui sont utilisées lorsque le premier contrôleur d'afficheur est configuré pour contrôler la première image pour qu'elle soit affichée, et
en réponse au fait de faire afficher par le second afficheur la première image avec le premier grossissement, le second contrôleur d'affichage utilise les données bitmap avec un nombre réduit de pixels.

7. Le système de traitement de l'information selon l'une quelconque des revendications 1 à 6, dans lequel en réponse à l'affichage de la première image, le second contrôleur d'affichage est configuré pour contrôler un objet pour l'exécution d'une opération concernant la première image à afficher, et en réponse à l'affichage de la seconde image, le second contrôleur d'affichage est configuré pour contrôler l'objet pour ne pas l'afficher.

8. Le système de traitement de l'information selon l'une quelconque des revendications 1 à 7, dans lequel le contrôle comprend une unité de sélection d'objet (314) qui, en réponse au fait que le second contrôleur d'affichage est configuré pour contrôler la seconde image pour l'afficher, rend un objet de la seconde image sélectionnable en réponse à une opération prédéterminée par un utilisateur.

9. Un procédé d'affichage d'image pour un système de traitement de l'information comprenant un premier afficheur (101) contrôlé par un premier contrôleur d'affichage (311) et un second afficheur (241) contrôlé par un second contrôleur d'affichage (312), le procédé comprenant :
faire en sorte d'afficher une première image par le premier afficheur ;
faire en sorte d'afficher sélectivement la première image par le second afficheur, qui est un dispositif distinct du premier afficheur, avec un premier grossissement, ou une seconde image qui est une image partielle de la première image et présente un second grossissement supérieur au premier grossissement,
spécifier par une unité de spécification de position (316) du système de traitement de l'information une position de l'image partielle dans la première image affichée sur le second afficheur, où :
en réponse à l'affichage de la seconde image sur le second afficheur, il y a contrôle du premier afficheur pour qu'il affiche de plus une image d'indicateur (Im13) indiquant la position de la seconde image dans la première image ;
il y a contrôle de l'image de l'indicateur affichée pour la déplacer dans une direction prescrite en fonction de la position spécifiée de la seconde image sur le second afficheur ; et dans lequel
en réponse à une opération de grossissement pour grossir la première image affichée sur le second afficheur, il y a affichage de la seconde image sur le second afficheur ;
en réponse à une transition d'un état où la seconde image est affichée vers un état où une autre image comprenant la seconde image est affichée, il y a retenue d'une position de la seconde image dans l'autre image ;
en réponse à l'exécution de l'opération de grossissement à nouveau après retenue de la position, il y a affichage de la seconde image à la position retenue sur le second afficheur ;
en réponse à l'exécution d'une opération prédéterminée par un utilisateur dans un état où la première image est affichée sur le second afficheur, il y a retour de la position retenue à une position initiale prédéterminée ; et
en réponse à l'exécution d'une opération pour faire défiler la première image affichée sur le premier afficheur ou le second afficheur par un utilisateur dans un état où la première image est affichée sur le second afficheur, il y a retour de la position retenue à la position initiale prédéterminée.

10. Un programme produit informatique comprenant des instructions qui, lorsqu'elles sont exécutées par un calculateur d'un système de traitement de l'information comprenant un premier afficheur (101) et un second afficheur (241), contrôlent le calculateur pour exécuter :
le fait d'afficher une première image par le premier afficheur ;
le fait d'afficher sélectivement la première image par le second afficheur, qui est un dispositif distinct du premier afficheur, avec un premier grossissement, ou une seconde image qui est une image partielle de la première image et présente un second grossissement supérieur au premier grossissement,
spécifier une position de l'image partielle dans la première image affichée sur le second afficheur, où :
en réponse à l'affichage de la seconde image sur le second afficheur, il y a contrôle du premier afficheur pour qu'il affiche de plus une image d'indicateur (Im13) indiquant la position de la seconde image dans la première image ;
il y a contrôle de l'image de l'indicateur affichée pour la déplacer dans une direction prescrite en fonction de la position spécifiée de la seconde image sur le second afficheur ; et dans lequel
en réponse à une opération de grossissement pour grossir la première image affichée sur le second afficheur, il y a affichage de la seconde image sur le second afficheur ;
en réponse à une transition d'un état où la seconde image est affichée vers un état où une autre image comprenant la seconde image est affichée, il y a retenue d'une position de la seconde image dans l'autre image ;
en réponse à l'exécution de l'opération de grossissement à nouveau après retenue de la position, il y a affichage de la seconde image à la position retenue sur le second afficheur ;
en réponse à l'exécution d'une opération prédéterminée par un utilisateur dans un état où la première image est affichée sur le second afficheur, il y a retour de la position retenue à une position initiale prédéterminée ; et
en réponse à l'exécution d'une opération pour faire défiler la première image affichée sur le premier afficheur ou le second afficheur par un utilisateur dans un état où la première image est affichée sur le second afficheur, il y a retour de la position retenue à la position initiale prédéterminée.
